# NEUE EUROPÄISCHE PATENTSCHRIFT

(11) **EP 1 932 429 B2**
(45) Veröffentlichungstag und Bekanntmachung des Hinweises auf die Entscheidung über den Einspruch: **26.08.2015**
(45) Hinweis auf die Patenterteilung: 12.05.2010
(21) Anmeldenummer: 07023830.8
(22) Anmeldetag: 10.12.2007
(51) Int. Cl.: A22C 13/00

(54) **Nahrungsmittelhülle auf Cellulosehydratbasis mit Nanopartikeln**
Food casing based on cellulose hydrate with nanoparticles
Enveloppes pour aliments à base d'hydrate de cellulose avec nanoparticules

(30) Priorität: 13.12.2006 DE 102006058635
(43) Veröffentlichungstag der Anmeldung: 18.06.2008
(73) Patentinhaber: Kalle GmbH, 65203 Wiesbaden (DE)
(72) Erfinder: König, Martina, 65207 Wiesbaden (DE); Effern, Volker, 65321 Heidenrod-Kemel (DE); Redmann-Schmid, Susanne, Dipl.-Ing., 55127 Mainz (DE); Lutz, Walter, Dr., 55257 Budenheim (DE)
(74) Vertreter: Plate, Jürgen

(56) Entgegenhaltungen:
- EP-A- 1 125 504
- EP-A1- 0 698 346
- WO-A-01/03508
- WO-A-02/00026
- US-A- 4 834 993
- RUAN D ET AL: "Structure and properties of regenerated cellulose/tourlamine nanocrystal composite films" JOURNAL OF POLYMER SCIENCE: PART B: POLYMER PHYSICS, WILEY, NEW YORK, NY, US, Bd. 42, Nr. 3, Dezember 2003 (2003-12), Seiten 367-373, XP002986001 ISSN: 0887-6266

## Beschreibung

Die Erfindung betrifft eine Nahrungsmittelhülle auf Cellulosehydratbasis, ein Verfahren zu ihrer Herstellung und ihre Verwendung als künstliche Wursthülle.

Flächen- oder schlauchförmige Nahrungsmittelhüllen auf der Basis von Cellulosehydrat werden für gewöhnlich nach dem Viskoseverfahren hergestellt. Dabei wird eine als "Viskose" oder "Viskoselösung" bezeichnete alkalische Cellulosexanthogenat-Lösung durch eine Ring- oder Breitschlitzdüse extrudiert, in saurer Lösung als Cellulosehydrat-Gel koaguliert und zu Cellulosehydrat regeneriert. Durch Verändern der Viskosezusammensetzung und Einarbeiten von Additiven lassen sich die Eigenschaften der Nahrungsmittelhülle variieren. Wird die Viskose ein- oder beidseitig auf ein zu einem Schlauch geformtes Faserpapier aufgetragen, koaguliert und die Cellulose regeneriert, so erhält man faserverstärkte Cellulosehüllen, auch bezeichnet als "Cellulose-Faserdärme". Bei der Herstellung von faserverstärkten Hüllen kann ebenfalls eine mit Additiven versetzte Viskose verwendet werden. Solche Hüllen werden besonders für natur- und schimmelgereifte Dauerwurst eingesetzt, beispielsweise für Salami. Durch Beschichten der Cellulosehydrathüllen mit einer Polyvinylidenchlorid-Dispersion läßt sich die Barrierewirkung für Sauerstoff und Wasserdampf deutlich erhöhen. Auf diese Weise werden sogenannte PVDC-innenlackierte Cellulose-Faserdärme hergestellt. Sie sind besonders geeignet für Brüh- und Kochwürste.

Nahrungsmittelhüllen erfüllen wichtige Funktionen bei der Herstellung, Reifung und Aufbewahrung von Wurst und müssen deshalb eine ganze Anzahl unterschiedlicher Eigenschaften besitzen. Neben ausreichender mechanischer Festigkeit, Temperaturbeständigkeit, Bräthaftung, Schälbarkeit, Geschmeidigkeit, Verarbeitungsfähigkeit, Wasserdampfdurchlässigkeit usw. wird eine Vielzahl von Eigenschaften verlangt, deren Priorität von der jeweiligen Anwendung abhängt. Die Verbesserung einer bestimmten Eigenschaft kann gegebenenfalls die Verschlechterung einer anderen zur Folge haben. So werden beispielsweise Geschmeidigkeit und Verarbeitungsfähigkeit der Hülle durch sekundäre Weichmacher, wie Glycerin, Glykol oder Polyglykol verbessert. Die sekundären Weichmacher sind nicht kovalent, sondern nur durch intermolekulare Kräfte an das Cellulosehydrat gebunden. Beim Wässern der Hülle vor dem Befüllen oder beim Brühen oder Kochen der Wurst werden sie praktisch vollständig herausgelöst. Die Folge davon ist ein Schrumpfen, Verdichten und Verspröden der Hülle nach dem Trocknen der Wurst. Durch das Schrumpfen kann der Innendruck der Wurst so weit ansteigen, daß sie platzt. Diese Erscheinungen sind vor allem auf eine Kristallisation des Cellulosehydrats zurückzuführen.

Um die Kristallisationsneigung zu vermindern, werden der Viskoselösung daher häufig sogenannte "primäre" Weichmacher zugefügt, die eine permanente Weichmachung bewirken. Als primäre Weichmacher werden insbesondere Verbindungen eingesetzt, die mit den Cellulosemolekülen reagieren, wie N-(C₉-C₂₄)Alkyl-N,N',N'-tris-hydroxymethyl-harnstoff oder ähnliche Verbindungen mit langen aliphatischen Kohlenstoffketten. Aber auch nicht-reaktive Verbindungen, wie Di- und Polyhydroxyverbindungen, die mit langkettigen aliphatischen Monocarbonsäuren verestert sind, Polymere auf Alkylenoxidbasis mit wenigstens einer N-Hydroxymethyl-carbamat-Gruppe oder Alginsäure oder Alginate werden verwendet.

Die Wasserdurchlässigkeit der Wursthüllen läßt sich mit diesen Methoden jedoch kaum beeinflussen. Entscheidend für das Reifeverhalten und das Schimmelwachstum bei natur- und schimmelgereifter Dauerwurst ist eine geringe Wasserdurchlässigkeit der Cellulosehüllen. Die gleichmäßige Reifung von Dauerwurst verlangt eine langsame Abgabe von Wasser durch die Hülle während der ersten Tage.

Faserverstärkte Cellulosehüllen zeigen jedoch allgemein eine hohe Wasserdurchlässigkeit von etwa 90 bis 110 I Wasser pro Quadratmeter Hülle in 24 Stunden bei einem Druck von 40 bar. Damit hergestellte Würste werden deshalb in Reifekammern gereift, in denen sich eine gleichbleibend hohe relative Luftfeuchtigkeit einhalten läßt. Zu geringe oder schwankende Luftfeuchtigkeit führt zu sogenannten Trockenrändern auf der Wurst. Die Ursache ist ein zu schnelles Austrocknen der Brätoberfläche in den ersten Tagen der Reifung. Der Trockenrand vermindert den weiteren Wasserverlust, so daß das Innere der Wurst auch nach der üblichen Reifezeit noch zu feucht ist.

Um die Wasserdurchlässigkeit zu vermindern, wurde versucht, die Cellulosehydrathülle zu verdichten, beispielsweise durch mehrfaches Trocknen der Hüllen oder durch den Einbau von Vernetzungsmitteln, wie cyclischen Harnstoffmethylolen.

Ein Qualitätsmerkmal für Cellulosehydrathüllen ist deren Feuchtebilanz. So sollen die Hüllen möglichst viel Wasser aufnehmen können, d.h. einen hohen Quellwert aufweisen. Zur Bestimmung des Quellwertes wird die Hülle in Wasser eingeweicht und anhaftendes Wasser bei einer bestimmten Drehzahl abgeschleudert. Nach dem Wiegen wird das Hüllenmaterial vollständig getrocknet und nochmals gewogen. Die Gewichtsdifferenz, ausgedrückt in Prozent des Gewichts der trockenen Hülle ergibt den Quellwert. Ein Quellwert von 120 % bedeutet demnach, daß eine Hülle von 100 g Trockengewicht 120 g Wasser aufnimmt. Die Hüllen sollen das Wasser nur langsam wieder abgeben. Die Wasserdurchlässigkeit sagt nichts aus über die Menge an Wasser, die aufgenommen oder abgegeben werden kann. Die Permeation ist allein ein Maß für die Wasserdurchlässigkeit der Hülle, während die Feuchtebilanz die Wasseraufnahme und das Wasserhaltevermögen charakterisiert. Eine gute Feuchtebilanz gewährleistet einen problemlosen Trocknungsprozeß, bei dem keine Versprödung oder Übertrocknung der Hülle auftritt. Durch den Zusatz von Alginsäure oder deren Salzen zu der Viskoselösung läßt sich eine permanent weichgemachte Wursthülle mit verbessertem Quellwert erhalten. Diese Wursthüllen kommen auch ohne Glycerin als sekundärem Weichmacher aus. Alginsäure bzw. Alginat lockert die Struktur des Cellulosehydrats auf, daher ist der Verdichtungsgrad des glycerinfreien Cellulosehydrats bei geringer Alginsäure- bzw. Alginat-Konzentration am höchsten, wobei die Mindestkonzentration bei 5 Gew.-%, bezogen auf das Gewicht der Cellulose, liegt. Allerdings sind solche Hüllen sind papierartig und knittern im trockenen Zustand oder bei geringen Feuchtegehalten. Dieser Nachteil läßt sich durch Erhöhen der Alginsäure-/Alginat-Konzentration vermindern. Dabei nimmt jedoch die Permeation zu, was zu verschlechterten Reifeeigenschaften der Würste führt.

Des weiteren soll sich eine Wursthülle gut abschälen lassen. Insbesondere Wursthüllen auf Cellulosehydratbasis, deren innere Oberfläche nicht imprägniert ist, haften bei Brühwurst allgemein so fest, daß sie sich nicht abziehen lassen, ohne dabei gleichzeitig die Brätoberfläche aufzureißen. Bei Dauerwurst hingegen haften sie so gering, daß sie sich während des Reifens von der Brätoberfläche ablösen (sie "stellen ab"), nicht mitschrumpfen und Falten bilden, unter denen sich ein Gelee-Absatz oder Schimmel entwickeln kann.

Hüllen für Brühwürste wurden daher innen mit Trennmitteln präpariert. Für solche Trennpräparationen sind beispielsweise Chromfettsäure-Komplexe, Gemische aus einer niederen Alkylcellulose und dem Dimer eines höheren Ketens, fluorierte, vernetzte Polymere und Gemische aus Lecithin und Alginat, Chitosan und/oder Casein verwendet worden.

Als Haftimprägnierung für Dauerwürste dienten insbesondere Gelatine, Polyamin-Polyamid-Epichlorhydrin-Harze und Chitosan.

Um zu verhindern, daß die Haftkomponente der Innenimprägnierung mit dem Cellulosematerial der Hülle in unerwünschter Weise reagiert, wurde der Imprägnierung ein natürliches Öl, ein synthetisches Triglyceridgemisch mit pflanzlichen Fettsäuren einer Kohlenstoffkettenlänge im Bereich von 4 bis 14 Kohlenstoffatomen, ein Paraffinöl und/oder ein Silikonöl zugesetzt. Daneben konnte noch ein Emulgator für das Öl vorhanden sein.

Spezielle Rohwurstsorten, wie Pfeffersalami, die mit einer Pfeffer/Gelatine-Schicht überzogen ist, stellen jedoch besondere Anforderungen an die Wursthülle. Für den Verkauf in Selbstbedienungsläden vorgesehene Rohwürste werden aus hygienischen Gründen häufig mit einer Folie zweitverpackt. Sie können auch mit einer - in der Regel transparenten - Tauchmasse überzogen sein. Solche Überzüge, die z. B. aus Polyvinylalkohol bestehen, werden auf die bereits fertig gereiften Würste aufgebracht. Bekannte, mit Haftimprägnierungen ausgestattete Wursthüllen zeigen nach dem Tauchen eine zu starke Haftung an dem Wurstbrät, während die mit Trennpräparationen ausgestatteten bereits während des Reifens abstellen. Durch die Zweitverpackung oder durch die Tauchbeschichtung wird unter anderem der Wasserhaushalt der Wurst verändert, was die Haftung zwischen Brätoberfläche und Hülle beeinflußt.

Die bisher im Markt bekannten Nahrungsmittelhüllen auf Cellulosehydratbasis erfüllen nicht alle an sie gestellten Anforderungen. Zahlreiche Anstrengungen der Hersteller von Cellulosehüllen haben häufig genug dazu geführt, daß mit der Verbesserung einer Eigenschaft, die Verschlechterung einer anderen in Kauf genommen werden mußte.

Inzwischen wurde versucht, die Nanotechnologie für die Nahrungsmittelverpackung zu nutzen. Die Verwendung von Nanopartikeln bei der Hüllenherstellung ermöglicht es, gewünschte Eigenschaften besonders zu verstärken. Bisher erfolgte der Einsatz solcher Partikel jedoch nur in Verbindung mit Kunststoffhüllen oder in Anwendungsbereichen außerhalb der Nahrungsmittelindustrie (z. B. in der Bekleidungs- oder Pharmaindustrie).

So ist in der DE-A 103 44 449 eine Klebstoff-Zusammensetzung offenbart, die eine Verbindung mit mindestens einer NCO-Gruppe und mindestens einer durch Bestrahlung härtbaren reaktiven funktionellen Gruppe als Komponente (A) sowie einen nanoskaligen Füllstoff als Komponente (B) enthält. Damit werden die einzelnen Lagen von Verbundfolien mit Barriere-Eigenschaften gegenüber CO₂, O₂, N₂, Wasserdampf und Aromastoffen zusammengeklebt.

Gemäß der DE-A 10 2004 038 274 wird ein nanoskaliger Füllstoff, bevorzugt ausgewählt ist aus der Gruppe Oxide, Nitride, Halogenide, Sulfide, Carbide, Telluride, Selenide der zweiten bis vierten Hauptgruppe, der Übergangselemente, der Lanthanide und/oder aus der Gruppe der Polyorganosiloxane, in einem strahlungshärtbaren Bindemittel eingesetzt. Dieses Bindemittel findet ebenfalls Verwendung bei der Herstellung von Verbundfolien mit Barriere-Eigenschaften.

In der EP-A 0 658 310 eine mindestens 4-schichtige coextrudierte, biaxial verstreckte, transparente, schlauchförmige Wursthülle mit hoher Barrierewirkung gegenüber Wasserdampf- und Sauerstoffpermeation und Lichtdurchlässigkeit offenbart. Die Sperrwirkung gegen Wasserdampf wird durch mindestens eine Schicht mit polyolefinischem Charakter erzeugt, die Sauerstoffsperrwirkung durch mindestens eine Schicht, die Ethylen/ Vinyl-alkohol-Copolymere als wesentlichen Bestandteil enthält. Zusätzlich enthält eine Schicht des coextrudierten Verbundes feinstteilige, anorganische Pigmente mit einer mittleren Korngröße zwischen 0,01 und 5 Mikrometern in einer Menge von bis zu 3 Gew.-%, bezogen auf das Gesamtgewicht der Hülle. Bei diesem Feinstpigment kann es sich beispielsweise um anorganische Pigmente aus Zinkoxid, Titandioxid, Eisenoxid oder Siliziumdioxid handeln. Bei der Herstellung der Hülle wird es beispielsweise als Masterbatch eingebracht. Das Trägermaterial in dem Masterbatch wird dabei so gewählt, daß es mit dem Grundmaterial der Schicht kompatibel ist. Bei einer Partikelgröße von weniger als 5 µm wird die Transparenz der Hülle kaum beeinflußt. Eine solche Hülle läßt weniger Licht durch, was eine geringere Vergrauung der Wurstoberfläche bewirkt. Eine Reduktion der Sauerstoffdurchlässigkeit durch die Zugabe der Feinstpigmente konnte jedoch nicht festgestellt werden. Die mit Hilfe der EVOH-haltigen Schicht erzeugte Sauerstoffbarriere ist bekanntermaßen zudem stark feuchteabhängig. Der Zusammenhang der Sauerstoffdiffusion und der relativen Feuchte wird für verschiedene Polymere in Verpackung mit Kunststoffen ist bekannt. So nimmt für EVOH die Sauerstoffdiffusion bei 30°C von 0,15 cm² - 25 µm / m² · d · bar bei 30 % rel. Feuchte auf 1,5 cm² · 25 µm / m² · d · bar bei 75 % rel. Feuchte zu.

Gegenstand der WO 2002/000026 A1 ist ein ein- oder mehrschichtiger, biaxial verstreckter Kunststoffdarm mit wenigstens einer Schicht aus Polyamid und gegebenenfalls Polyolefinen bestehenden Schicht, die 0,1 bis 4 Gew.-% an nano-dispersen Additive enthält. Bei den diesen Additiven handelt es sich insbesondere um Schichtsilikate, die auch organisch modifiziert sein können. Die Dicke der Teilchen beträgt vorzugsweise weniger als 10 nm. Dieser Kunststoffdarm zeichnet sich gegenüber vergleichbaren Kunststoffdärmen ohne nano-disperse Additive durch eine verbesserte Barrierewirkung gegenüber Sauerstoff bei unverändert hoher Transparenz aus.

In der US-B 6 811 599 ist ein thermoplastisches Material offenbart, das als wesentliche Bestandteile natürliche Polymere, Weichmacher und Tonmineral, wie Montmorillonit, enthält. Hierbei kann das natürliche Polymer ein Polysaccharid oder Protein sein; insbesondere sind Stärke, Cellulose, Chitosan, Alginsäure, Inulin, Pektin, Casein und deren Derivate geeignet. Das Tonmaterial ist schichtartig strukturiert und weist eine Kationen-Austausch-Kapazität von 30 bis 250 Milliäquivalenten pro 100 g seines Gewichtes auf. In dem thermoplastischen Material liegt das Tonmineral in gelöster Form vor, wobei die strukturbildenden Schichten weitgehend voneinander separiert sind. Der Anteil des Tonminerals im thermoplastischen Material beträgt zwischen 0,1 und 90 Gew.-%. Als Weichmacher werden Wasser, Glycerin, Glykol sowie Glykol-Oligomere oder eine Kombination dieser Substanzen vorgeschlagen. Das thermoplastische Material auf Basis von Kartoffelstärke, Glycerin, Wasser und Tonmineral zeigt ein verbessertes Rückhaltevermögen für Wasser, so daß die Versprödung, die bei den bekannten thermoplastischen Materialien auf natürlicher Basis nach kurzer Zeit eintritt, maßgeblich verzögert wird.

In der US-A 2005/0051054 ist ein Material beschrieben, das Nano-Komposite aus Cellulose und Tonmineral beinhaltet, wobei der Anteil des Tonminerals 0,5 bis 25 Gew.-%, bevorzugt 5 bis 15 Gew.% und insbesondere 7 bis 10 Gew.% der Nano-Komposite beträgt. Die in dem Material verwendete Cellulose wird aus Spreu, Holz, Blättern, Gras, Bagasse, Baumwolle oder Altpapier gewonnen. Als Tonmineralien werden beispielsweise Hektorite oder Montmorillonit eingesetzt. Im Vergleich zu konventioneller Cellulose, beispielsweise aus Baumwolle, weist das Nano-Komposit-Material eine erheblich verbesserte Beständigkeit gegenüber thermischer Belastung auf.

In der EP-B 0 598 836 (= US-A 5 747 560) ist ein Polymer-Nano-Komposit mit plättchenförmigen Partikeln im Dickenbereich von wenigen Nanometern offenbart. Mit diesen Materialien sollen mit konventioneller Folienextrusionstechnologie Folien im Dickenbereich insbesondere zwischen 25 und 75 µm hergestellt werden können. Dabei können die Folien "gereckt" sein, beispielsweise über ein Folienblasverfahren.

In der EP-A 0 358 415 (= US-A 5 248 720) ist eine Formmasse aus einem Polyamidharz mit einem darin gleichmäßig dispergierten Schichtsilikat beschrieben. Die einzelnen Schichten des Schichtsilikats weisen Dicken um 1 nm und Seitenlängen bis zu 1 µm auf. Mit diesem Material aus Polyamid 6 als Basispolymer können Formteile, darunter auch verstreckte Folien, mit signifikant erhöhter Sauerstoffbarriere hergestellt werden.

Die Konsumenten von Fleisch- und Wurstwaren bevorzugen Produkte, die über einen langen Zeitraum frisch bleiben und Geschmack, Bekömmlichkeit und äußeres Erscheinungsbild bewahren. Zudem sollen sich die Produkte für den Verzehr leicht zubereiten lassen, wobei die Eignung zum Kochen, Braten, Grillen und die Schälbarkeit eine wichtige Rolle spielen. Schließlich fordern die Hersteller von Fleisch- und Wurstwaren, daß die zur Herstellung der Produkte verwendeten Nahrungsmittelhüllen leicht zu verarbeiten sind.

Diese vielfältigen Anforderungen werden von den im Stand der Technik bekannten Nahrungsmittelhüllen auf Basis von Cellulosehydrat nur partiell erfüllt.

Die Aufgabe der vorliegenden Erfindung ist es, eine Nahrungsmittelhülle auf Cellulosehydratbasis bereitzustellen, deren Eigenschaften die Markterfordernisse besser erfüllen, als dies nach dem Stand der Technik möglich ist. Insbesondere soll die erfindungsgemäße Nahrungsmittelhülle folgenden Anforderungen gerecht werden:
- hohe mechanische Festigkeit, insbesondere beim Füllen,
- Beständigkeit gegenüber heißem oder kochendem Wasser,
- ein elastisches Schrumpfverhalten, damit sie auch nach längerer Lagerung nicht von dem Nahrungsmittel abstellt,
- Resistenz gegen cellulytisch wirkende Enzyme, wie sie beispielsweise von Edelschimmel unter ungünstigen Bedingungen gebildet werden können,
- gegebenenfalls baktericide Wirkung sowie
- gegebenenfalls Vernetzbarkeit unter der Einwirkung eines magnetischen Wechselfeldes.

Gelöst werden diese Aufgaben durch eine Nahrungsmittelhülle auf Basis von Cellulosehydrat, die dadurch gekennzeichnet ist, daß sie nanoskalige Additive enthält, die in die Cellulosehydrat-Matrix eingearbeitet sind, wobei der auf das Gesamtgewicht der Nahrungsmittelhülle bezogene Anteil nanoskaliger Additive 1 bis 50 Gew.-% beträgt und das nanoskalige Additiv ein Schichtsilikat, ein Spherosilikat oder ein polyedrisches Oligohydrosilsesquioxan ist. Zusätzlich kann eine Imprägnierung oder Beschichtung mit nanoskaligen Additiven auf die Hülle aufgebracht sein. Allgemein umfaßt der Begriff "nanoskalige Additive" Stoffe, die in Form von Nanopartikeln vorliegen, die in mindestens einer Dimension eine Abmessung im Bereich von weniger als 1 nm bis zu 1000 nm haben. Die besondere Funktionalität oder Wirkung von Nanopartikeln und nanoskaligen Additiven beruht zum einen auf ihrer großen spezifischen Oberfläche, wobei die spezifische Oberfläche das Verhältnis von Oberfläche zu Masse (z.B. m²/kg) oder von Oberfläche zu Volumen (z.B. m⁻¹) bezeichnet. Des weiteren können Nanopartikel chemische Eigenschaften aufweisen, die sich deutlich von den Eigenschaften eines Festkörpers mit gleicher chemischer Zusammensetzung und makroskopischen Abmessungen unterscheiden. Hierbei sind die besonderen chemischen Eigenschaften von Nanopartikein eine Folge ihrer modifizierten elektronischen Struktur. Herstellen lassen sich die Nanopartikel nach zwei grundlegend verschiedenen Verfahren. In dem einen entstehen die Partikel durch Aggregation von Stoffen, die molekular in gelöster, flüssiger oder gasförmiger Form vorliegen (Kondensationsmethode oder Bottom-up Verfahren). In dem anderen werden gröbere Partikel zu Nanopartikel gemahlen, beispielsweise in einer naß betriebenen Rührwerkskugelmühle (Dispersionsmethode oder Top-down Verfahren). Nach dem Bottom-up Verfahren hergestellten Nanopartikel sind häufig stark agglomeriert. Das Vermischen dieser Nanopartikel mit der Viskose erfolgt daher zweckmäßig in Dissolvern oder Mischern, die die Agglomerate aufbrechen und die dabei frei werdenden einzelnen Partikel dispergieren. Geeignete Dissolver und Mischer sind bekannt und kommerziell erhältlich, beispielsweise von der Netzsch Feinmahltechnik GmbH in D-95100 Selb.

Die nanoskaligen Additive der vorliegenden Erfindung bestehen aus organischen oder anorganischen Nanopartikeln, die in mindestens einer Dimension eine Abmessung zwischen 0,5 und 1000 nm aufweisen. Des weiteren werden Additive aus organisch/anorganischen Nano-Komposit-Partikeln eingesetzt. Der auf das Gesamtgewicht der Nahrungsmittelhülle bezogene Anteil der nanoskaligen Additive beträgt 1 bis 50 Gew.-%, bevorzugt 1 bis 20 Gew.-% und insbesondere 2 bis 6 Gew.-%.

In einer bevorzugten Ausführungsform der Erfindung besteht die Nahrungsmittelhülle aus einer Matrixschicht auf Cellulosehydratbasis, in der die nanoskaligen Additive dispergiert sind. In zwei weiteren Ausgestaltungen der Erfindung weist die Nahrungsmittelhülle auf ihrer Innen- oder Außenseite eine nanoskalige Additive enthaltende Beschichtung auf.

Bevorzugt sind die nanoskaligen Additive ausgewählt aus der Gruppe:
- Schichtsilikate, insbesondere Montmorillonit und
- Spherosilikate, insbesondere polyedrisches Oligohydrosilsesquioxan und polyedrisches Oligosilsesquioxan (POSS).

Zur Herstellung der erfindungsgemäßen Nahrungsmittelhülle wird das nanoskaliges Additiv mit Viskose vermischt und das resultierende Gemisch durch eine Düse extrudiert und regeneriert bzw. ausgefällt. In einer alternativen Ausführungsform wird das nanoskalige Additive mit einer Celluloselösung, beispielsweise einer Cellulose, die in einem gegebenenfalls wasserhaltigen Aminoxid, wie N-Methyl-morpholin-N-oxid-Monohydrat, gelöst ist, vermischt. Diese Lösung kann wird dann extrudiert - gegebenenfalls auf ein Trägermaterial - und anschließend in einem Fällbad ausgefällt. Die Cellulose wird in dieser Ausführungsform chemisch nicht verändert.

Eine Imprägnierung oder Beschichtung mit nanoskaligen Partikeln kann auf die Innen- und/oder Außenseite der Nahrungsmittelhülle auf Cellulosehydrat-Basis aufgebracht sein. Die Beschichtung bzw. Imprägnierung wird nach üblichen, dem Fachmann an sich bekannten Verfahren hergestellt. Die vorliegende Erfindung umfaßt auch solche Hüllen, die nanoskalige Partikel homogen verteilt in der Cellulosehydrat-Matrix wie auch solche Partikel als Beschichtung oder Imprägnierung enthalten. Eine Beschichtung oder Imprägnierung ist daran zu erkennen, daß sich die Partikel ausschließlich auf der (äußeren und/oder inneren) Oberfläche der Hülle befinden oder in den oberflächennahen Bereichen der Hülle konzentriert sind. Die Partikel in der Matrix können identisch mit denen in der Beschichtung oder Imprägnierung sein oder auch verschieden. Insbesondere für Beschichtungen oder Imprägnierungen werden bevorzugt nanoskalige Partikel ausgewählt, die eine Wechselwirkung mit dem Cellulosehydrat eingehen können, sei es durch ionische oder kovalente Bindungen, durch Wasserstoffbrücken-Bindungen oder auf andere Weise, so daß sie bei der weiteren Verarbeitung der Hülle weniger oder bis gar nicht mehr auswaschbar sind. Kovalente Bindungen kann beispielsweise das unten genannte POSS eingehen. In den Imprägnierungen oder Beschichtungen können die nanoskaligen Partikel mit anderen Bestandteilen, wie Bindemitteln (z.B. Proteine, Polysaccharide oder Derivate davon), Aroma-, Geschmacks- und/oder Farbstoffen (z.B. Flüssigrauch), bekannten Haft- oder Trennmitteln, Fungiziden, Pigmenten usw. kombiniert sein.

Eine spezielle Ausführungsform der Erfindung betrifft Nahrungsmittelhüllen auf Cellulosebasis mit verringerter Durchlässigkeit für Wasser und Sauerstoff. Hierzu werden der Cellulose (bzw. der Viskoselösung) nanoskalige Schichtsilikate wie Montmorillonit beigefügt. Die in der fertigen Wursthülle praktisch gleichmäßig dispergierten Schichtsilikat-Partikel behindern die Diffusion bzw. verlängern den Diffusionspfad der Wasser- und Sauerstoffmoleküle durch das im wesentlichen "offene" Netzwerk der Cellulosemoleküle/kristalle.

Eine weitere vorteilhafte Ausführungsform der Erfindung ist auf eine Nahrungsmittelhülle gerichtet, die gegen die von Edelschimmel gebildeten Cellulasen resistent ist. Hierzu werden als nanoskalige Additive polyedrische Oligosilsesquioxane (POSS) verwendet, wobei die POSS-Moleküle mit organischen Gruppen (R) funktionalisiert sind.

Bevorzugt werden polyedrische Oligosilsesquioxane (POSS), bei denen R ausgewählt ist aus der Gruppe der organischen Verbindungen mit 1 bis 30 Kohlenstoffatomen, insbesondre ist R eine Verbindung ausgewählt aus der Gruppe bestehend aus Phenyl, iso-Octyl, Cyclohexyl, Cyclopentyl, Isobutyl, Methyl, Trifluorpropyl und Phenethyl.

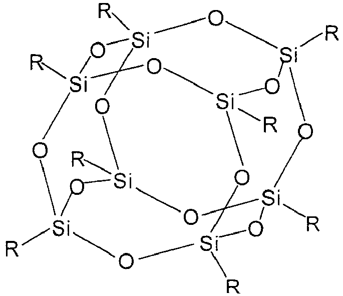

Als besonders geeignet erweist sich ein POSS, bei dem R ein Alkylrest mit einer Epoxy-Endgruppe ist, z.B.

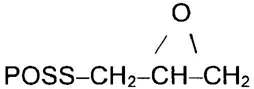

Die Epoxy-Endgruppen können eine kovalente Bindung des POSS mit den Cellulosemolekülen herstellen. Völlig überraschend hat sich gezeigt, daß schon eine geringe Beimengung von POSS im Bereich von 2 Gew.-% die Resistenz der Wursthülle gegen die von den Schimmelpilzen unter ungünstigen Reifebedingungen gebildeten Cellulasen merklich verbessert. Die hohe Effizienz beruht u.a. auf der hervorragenden Löslichkeit und der praktisch fehlenden Agglomeration der POSS-Nanopartikel.

Eine weitere Ausführungsform der Erfindung betrifft einen Cellulose-Faserdarm, der nanoskaligen Additive enthält. Bei seiner Herstellung wird ein naßfestes, flächenförmiges Fasermaterial, beispielsweise ein Hanffaserpapier, zu einem Schlauch mit überlappenden Längskanten geformt. Dieser Schlauch wird dann durch eine Beschichtungsdüse geführt und von innen, von außen oder von beiden Seiten mit Viskose beaufschlagt. Auf diese Weise lassen sich sogenannte außenviskosierte, innenviskosierte oder doppelviskosierte Cellulose-Faserdärme erhalten. Die nanoskaligen Additive können dementsprechend mit der von außen oder der von innen aufgebrachten Viskose vermischt. Gegebenenfalls können sie auch mit der von innen und der von außen angetragenen Viskose vermischt sein. Die Koagulation und Regeneration der Cellulose erfolgt wie üblich in sauren Fäll- und Regenerierbädern. Anschließend wird, ebenfalls wie üblich, der Faserdarm durch mehrere Waschbäder geführt, gegebenenfalls auch durch ein Weichmacherbad. Als Weichmacher dient in der Regel Glycerin, das in Form einer wäßrigen Glycerinlösung aufgebracht wird. Die nanoskaligen

Additive beeinträchtigen diese Verfahrensschritte nicht. Sie werden praktisch nicht herausgewaschen aus der Cellulosehydrat-Matrix

Die erfindungsgemäße Hülle kann zusätzlich die in der Einleitung beschriebenen primären und/oder sekundären Weichmacher enthalten. Sie kann außerdem auf der Innen- und/oder Außenseite beschichtet oder imprägniert sein, beispielsweise mit einer Innenbeschichtung auf Basis von Polyvinylidenchlorid oder Vinylidenchlorid-Copolymeren.

Bevorzugt wird die erfindungsgemäße Nahrungsmittelhülle zur Verpackung von Fleisch- und Wurstwaren, insbesondere als künstliche Wursthülle, verwendet.

Die nachfolgenden Beispiele dienen zur Illustration der Erfindung. Prozente sind darin Gewichtsprozente soweit nicht anders angegeben oder aus dem Zusammenhang unmittelbar ersichtlich.

### Beispiel 1

Eine schlauchförmige farblose Wursthülle vom Kaliber 60 wurde nach dem bekannten Viskoseverfahren - im vorliegenden Fall mittels einer Faser S Zellstofflösung in CS₂/NaOH - hergestellt, wobei dem Viskosestrom 2 bzw. 2,5 % an nanoskaligem Schichtsilikat vom Typ "Polymer Grade Montmorillonites PGN" der Firma Nanocor, jeweils bezogen auf das Gewicht der Cellulose, beigemengt wurde. Die Viskosemischung wurde in der üblichen Weise extrudiert, regeneriert und die so entstandene Hülle anschließend getrocknet. Zu Vergleichszwecken wurde eine Hülle ohne Zusatz von Nanopartikeln herangezogen.

Im einzelnen wurden folgende Werte gemessen:

| **nanoskaliges Schichtsilikat** | | **ohne** | **2 Gew.-%** | **2,5 Gew.-%** |
|---|---|---|---|---|
| WDD [g/m² d] | | 900 | 760 | 860 |
| Wasserpermeation [l/m² d] | | 100 | 118 | 92 |
| Oberflächenspannung [mN/m] | | 44 | 35 | 35 |
| Schälbarkeit | | befriedigend | gut | gut bis sehr gut |
| Reißfestigkeit [N/mm²] | längs | 31 | 29 | 31 |
| | quer | 29 | 30 | 28 |

### Beispiel 2 (nicht erfindungsgemäß)

Ein farbloser Cellulose-Faserdarm (Faser N der Kalle GmbH) mit einem Durchmesser von 55 mm (= Kaliber 55) wurde auf der Innenseite mit einer 5 %igen wäßrigen Lösung des im Beispiel 1 genannten nanoskaligen Schichtsilikats imprägniert. Dadurch wurde die Wasserpermeation von 100 l/m² · d im nicht imprägnierten Zustand auf 82 l/m² · d reduziert.

## Patentansprüche

1. Nahrungsmittelhülle auf Basis von Cellulosehydrat, **dadurch gekennzeichnet, daß** sie nanoskalige Additive enthält, die in die Cellulosehydrat-Matrix eingearbeitet sind, wobei der auf das Gesamtgewicht der Nahrungsmittelhülle bezogene Anteil nanoskaliger Additive 1 bis 50 Gew.-% beträgt und das nanoskalige Additiv ein Schichtsilikat, ein Spherosilikat oder ein polyedrisches Oligohydrosilsesquioxan ist.

2. Nahrungsmittelhülle nach Anspruch 1, **dadurch gekennzeichnet, daß** die nanoskaligen Partikel in der von dem Cellulosehydrat gebildeten Matrix gleichmäßig verteilt sind.

3. Nahrungsmittelhülle nach Anspruch 1 oder 2, **dadurch gekennzeichnet, daß** die nanoskaligen Partikel in den oberflächennahen Bereichen der Hülle konzentriert sind.

4. Nahrungsmittelhülle nach Anspruch 1, **dadurch gekennzeichnet, daß** die nanoskaligen Additive aus Nanopartikeln bestehen, bevorzugt mit einer Abmessung zwischen 0,5 und 1000 nm in mindestens einer Dimension.

5. Nahrungsmittelhülle nach Anspruch 1, **dadurch gekennzeichnet, daß** die nanoskaligen Additive aus organischen oder anorganischen Nanopartikeln bestehen.

6. Nahrungsmittelhülle nach Anspruch 1, **dadurch gekennzeichnet, daß** die nanoskaligen Additive aus organisch/anorganischen Nano-Komposit-Partikeln bestehen.

7. Nahrungsmittelhülle nach Anspruch 1, **dadurch gekennzeichnet, daß** der auf das Gesamtgewicht der Nahrungsmittelhülle bezogene Anteil nanoskaliger Additive 1 bis 20 Gew.-%, bevorzugt 2 bis 6 Gew.-% beträgt.

8. Nahrungsmittelhülle nach einem oder mehreren der Ansprüche 1 bis 7, **dadurch gekennzeichnet, daß** sie eine Faserverstärkung umfaßt, bevorzugt ein flächenförmiges Fasermaterial, besonders bevorzugt ein naßfestes Hanffaserpapier.

9. Nahrungsmittelhülle nach Anspruch 7, **dadurch gekennzeichnet, daß** die Faserverstärkung auf der Innen- und/oder Außenseite eine Schicht aus Cellulosehydrat aufweist, wobei die nanoskaligen Partikel in einer oder beiden Cellulosehydratschichten verteilt sind.

10. Nahrungsmittelhülle nach Anspruch 1, **dadurch gekennzeichnet, daß** das nanoskalige Schichtsilikat Montmorillonit ist.

11. Verfahren zur Herstellung einer Nahrungsmittelhülle auf Basis von Cellulosehydrat gemäß einem oder mehreren der Ansprüche 1 bis 10, **dadurch gekennzeichnet, daß** mindestens ein nanoskaliges Additiv mit Viskoselösung oder einer Celluloselösung vermischt und das Gemisch durch eine Düse extrudiert und regeneriert bzw. ausgefällt wird und gegebenenfalls zusätzlich auf ihrer Innen- und/oder Außenseite eine nanoskalige Additive enthaltende Beschichtung oder Imprägnierung aufgebracht wird.

12. Verwendung der Nahrungsmittelhülle nach einem oder mehreren der Ansprüche 1 bis 10 als künstliche Wursthülle, bevorzugt für Rohwurst.

## Claims

1. A food casing based on cellulose hydrate, which comprises nanoscale additives which are incorporated into the cellulose hydrate matrix, where the proportion of nanoscale additives, based on the total weight of the food casing, is from 1 to 50 % by weight and the nanoscale additive is a phyllosilicate, a spherosilicate or a polyhedric oligohydrosilsesquioxane.

2. The food casing as claimed in claim 1, wherein the nanoscale particles have uniform distribution in the matrix formed by the cellulose hydrate.

3. The food casing as claimed in claim 1 or 2, wherein the nanoscale particles have been concentrated in those regions of the casing in the vicinity of the surface.

4. The food casing as claimed in claim 1, wherein the nanoscale additives are composed of nanoparticles which preferably measure from 0.5 to 1000 nm in at least one dimension.

5. The food casing as claimed in claim 1, wherein the nanoscale additives are composed of organic or inorganic nanoparticles.

6. The food casing as claimed in claim 1, wherein the nanoscale additives are composed of organic/inorganic nanocomposite particles.

7. The food casing as claimed in claim 1, wherein the proportion of nanoscale additives, based on the total weight of the food casing, is from 1 to 20 % by weight, preferably from 2 to 6 % by weight.

8. The food casing as claimed in one or more of claims 1 to 7, which encompasses a fiber reinforcement, preferably a flat fiber material, particularly preferably a hemp-fiber paper with wet strength.

9. The food casing as claimed in claim 7, wherein the inner and/or outer side of the fiber reinforcement has a layer composed of cellulose hydrate, where the nanoscale particles have been distributed in one or both cellulose hydrate layers.

10. The food casing as claimed in claim 1, wherein the nanoscale phyllosilicate is montmorillonite.

11. A process for production of a food casing based on cellulose hydrate as claimed in one or more of claims 1 to 10, which comprises mixing at least one nanoscale additive with viscose solution or with a cellulose solution and extruding the mixture through a die and regenerating or precipitating it and optionally additionally applying, to its inner side and/or outer side, an impregnating agent or a coating comprising nanoscale additives.

12. The use of the food casing as claimed in one or more of claims 1 to 10 as synthetic sausage casing, preferably for uncooked sausage.

## Revendications

1. Enveloppe pour aliments à base d'hydrate de cellulose, **caractérisée en ce qu'**elle contient des additifs de taille nanométrique qui sont intégrés dans la matrice d'hydrate de cellulose, la fraction d'additifs de taille nanométrique représentant 1 à 50 % en poids par rapport au poids total de l'enveloppe pour aliments et l'additif de taille nanométrique étant un phyllosilicate, un sphérosilicate ou un oligohydrosilsesquioxane polyédrique.

2. Enveloppe pour aliments selon la revendication 1, **caractérisée en ce que** les particules de taille nanométrique sont réparties uniformément dans la matrice formée par l'hydrate de cellulose.

3. Enveloppe pour aliments selon la revendication 1 ou 2, **caractérisée en ce que** les particules de taille nanométrique sont concentrées dans les zones proches de la surface de l'enveloppe.

4. Enveloppe pour aliments selon la revendication 1, **caractérisée en ce que** les additifs de taille nanométrique sont constitués de nanoparticules, mesurant de préférence entre 0,5 et 1000 nm dans au moins une dimension.

5. Enveloppe pour aliments selon la revendication 1, **caractérisée en ce que** les additifs de taille nanométrique sont constitués de nanoparticules organiques ou inorganiques.

6. Enveloppe pour aliments selon la revendication 1, **caractérisée en ce que** les additifs de taille nanométrique sont constitués de particules nanocomposites organiques / inorganiques.

7. Enveloppe pour aliments selon la revendication 1, **caractérisée en ce que** la fraction d'additifs de taille nanométrique représente de 1 à 20 % en poids, de préférence de 2 à 6 % en poids par rapport au poids total de l'enveloppe pour aliments.

8. Enveloppe pour aliments selon une ou plusieurs des revendications 1 à 7, **caractérisée en ce qu'**elle comporte un renforcement par des fibres, de préférence un matériau fibreux surfacique, mieux encore un papier à fibres de chanvre résistant à l'humidité.

9. Enveloppe pour aliments selon la revendication 7, **caractérisée en ce que** le renforcement par des fibres présente une couche en hydrate de cellulose sur le côté intérieur et/ou côté extérieur, les particules de taille nanométrique étant réparties dans une ou dans les deux couches d'hydrate de cellulose.

10. Enveloppe pour aliments selon la revendication 1, **caractérisée en ce que** le phyllosilicate de taille nanométrique est de la montmorillonite.

11. Procédé de production d'une enveloppe pour aliments à base d'hydrate de cellulose selon une ou plusieurs des revendications 1 à 10, **caractérisé en ce qu'**au moins un additif de taille nanométrique est mélangé avec une solution de viscose ou une solution de cellulose et le mélange est extrudé par une filière et régénéré ou précipité et un revêtement ou un agent d'imprégnation contenant des additifs de taille nanométrique est éventuellement appliqué en plus sur son coté intérieur et/ou côté extérieur.

12. Utilisation de l'enveloppe pour aliments selon une ou plusieurs des revendications 1 à 10 comme enveloppe synthétique pour saucisse, de préférence pour saucisse crue.
